Europäisches Patentamt

European Patent Office

Office européen des brevets

(19)

(11) Veröffentlichungsnummer: **0 000 182**
**A1**

# EUROPÄISCHE PATENTANMELDUNG

(12)

(21) Anmeldenummer: 78100220.9

(22) Anmeldetag: 22.06.78

(51) Int. Cl.²: **G 01 N 27/06, G 01 R 27/22**

(30) Priorität: 22.06.77 DE 2728152

(43) Veröffentlichungstag der Anmeldung:
10.01.79 Patentblatt 79/1

(84) Benannte Vertragsstaaten:
BE CH FR GB LU NL SE

(71) Anmelder: Arn. Georg AG,
Hofgründchen 66-70,
D-5450 Neuwied am Rhein (DE)

(72) Erfinder: Brechtel, Rudolf,
Beethovenstrasse 9,
D-5455 Rengsdorf (DE)

(72) Erfinder: Mandl, Johannes,
Am Reichelbach 24,
D-5450 Neuwied 13 (DE)

(72) Erfinder: Sobotka, Hans Friedrich,
Hauptstrasse 94a,
D-5451 Leutesdorf (DE)

(74) Vertreter: Wey, Hans-Heinrich, Dipl.-Ing. et al,
Patenanwälte Müller-Börner Wey & Körner
Windemayerstrasse 49,
D-8000 München 22 (DE)

(54) Vorrichtung zum Messen des Elektrolytgehalts von Luft.

(57) Es wird eine Vorrichtung zum Messen des Elektrolytgehaltes von Luft angegeben, die in der Lage ist, auch kleinste Elektrolytkonzentrationen schnell und genau zu erfassen. Die Vorrichtung arbeitet mit einem elektrischen Leitfähigkeitsmesskreis (20) mit einem von der zu untersuchenden Luft umströmten Sensor (2,3) über den im geschlossenen Kreislauf geführtes destilliertes Wasser geleitet wird, das immer wieder entionisiert wird.

1/1

EP 0 000 182 A1

Croydon Printing Company Ltd.

Arn. Georg AG

Vorrichtung zum Messen des Elektrolytgehalts
von Luft

Bei der Oberflächenveredlung von Metallteilen durch Aufbringen von Metallüberzügen wird mit säurehaltigen, insbesondere salzsäurehaltigen Beizbädern gearbeitet, mit deren Hilfe die Oberflächen der zu verarbeitenden Teile zunächst gereinigt werden. Während in der Galvanik, in welcher im allgemeinen Kleinteile bearbeitet werden, Abluftprobleme wegen der geringen Größe der Säurebäder und der Teile nicht auftreten, liegen die diesbezüglichen Probleme in der Feuerverzinkerei sehr schwierig. Sie resultieren daraus, daß die bearbeiteten Teile zumeist sehr groß sind (z.B. Konstruktionen, Leitungsmasten und dgl.), welche entsprechend große Bäder erforderlich machen und nach dem Herausnehmen aus dem Säurebad einen erheblichen Anteil der anhaftenden Säure an die Umgebungsluft abgeben. So kann es dazu kommen, daß in den Arbeitsräumen die Säurekonzentration in der Luft unzulässig hohe Werte (mehr als 5 ppm bzw. 7 mg $HCl/m^3$ Luft) annimmt.

Es besteht daher der Wunsch nach einer automatisch arbeitenden Meßvorrichtung, welche die Säurekonzentration von Luft zu messen in der Lage ist. Marktnachforschungen haben ergeben, daß solche Meßvorrichtungen, die im erforderlichen ppm-Bereich oder ppb-Bereich arbeiten, nicht verfügbar sind. Der Erfindung liegt die Aufgabe zugrunde, eine solche Meßvorrichtung anzugeben.

Diese Aufgabe wird durch die im Patentanspruch angegebene Erfindung gelöst. Besonders vorteilhafte Ausgestaltungen der Erfindung sind Gegenstand der Unteransprüche.

Die Erfindung arbeitet mit einem geschlossenen Wasserkreislauf, in welchem das den Meßelektroden zugeführte Wasser immer wieder entionisiert wird, so daß, abgesehen von den von der gemessenen Luft hervorgerufenen Verdunstungsverlusten, kein Wasser ersetzt werden muß. Wenn man die Meßvorrichtung mit Wechselstrom an den Meßelektroden betreibt und auf diese Weise Nullpunktwanderungen, die durch Elektrolysewirkung bei Gleichstrombetrieb hervorgerufen werden könnten, ausschaltet, kann die Vorrichtung sehr langzeitig ohne jegliche Wartung arbeiten. Die Vorrichtung kann von ungelerntem Personal verwendet werden. Es ist lediglich die Eichung der Anzeigeskala mit einem Eichgas durch qualifiziertes Fachpersonal notwendig.

Die angegebene Elektrodenanordnung weist bei relativ kleinen gegenseitigen Abständen der Elektroden eine relativ große Oberfläche auf, welche mit der zu untersuchenden Luft in Berührung gebracht wird, und ist in der Lage, mit einem relativ kleinen Wasserdurchsatz zu arbeiten. Es genügt, wenn das Wasser tropfenweise zugeführt wird. Die Tropfmenge wird vorzugsweise mittels einer Kapillare konstant gehalten, welche unter einem konstanten Flüssigkeitsdruck steht, welcher auf einfache Weise mit Hilfe eines Überlaufgefäßes erzeugt wird. Aus der definierten, pro Zeiteinheit an den Elektroden vorbeigeleiteten Luftmenge und der sich dadurch ergebenden Verdunstung und der definierten Ergänzung durch nachtropfendes Wasser stellt sich je nach Säuregehalt der untersuchten Luft ein bestimmter Leitwert zwischen den Elektroden ein, welcher meßtechnisch erfaßbar ist. Eine Bereichsumschaltung der Meßvorrichtung kann zweckmäßigerweise an den elektronischen Meßkreis, mit welchem die Elektroden verbunden sind, erfolgen.

Die hohe Sensitivität der Meßvorrichtung ergibt sich zum einen aus der gewählten Elektrodenanordnung, zum anderen aus der sehr geringen Wassermenge, die an ihr wirksam ist (Bruchteile von ml).

Die Anordnung ist nicht selektiv auf Salzsäure empfindlich, sondern auf alle Verunreinigungen, die in Wasser gelöst eine Leitfähigkeiterhöhung zwischen Elektroden bewirken. Die Vorrichtung kann somit auch zur Kontrolle der Abgase von Feuerverzinkungsbädern oder zur Steuerung der Entlüftung in Laboratorien und Betrieben anderer Art benutzt werden. Bei unveränderter Elektrodenanordnung ist dazu lediglich eine entsprechende Anpassung der Empfindlichkeit des elektronischen Meßkreises notwendig.

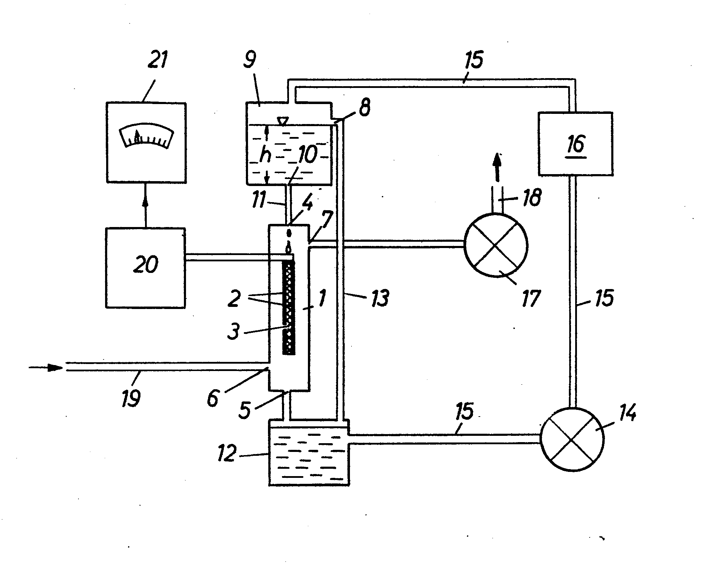

Die Erfindung soll nachfolgend unter Bezugnahme auf eine in der Zeichnung im Prinzip dargestellte Ausführungsform erläutert werden.

Kernstück der erfindungsgemäßen Vorrichtung ist eine abgeschlossene, im wesentlichen rohrförmige Kammer 1, vorzugsweise aus Glas, in welcher dicht nebeneinander zwei baumwollisolierte Silberdrähte 2 etwa lotrecht verlaufend angeordnet sind. Die isolierten Silberdrähte 2 sind gemeinsam mit einem Baumwollfaden umwickelt. Die Isolierung und der Umwicklungsfaden bilden ein Kissen 3, welches mit Wasser tränkbar ist. Die Kammer ist oberhalb der Silberdrähte 2 mit einem Wassereinlauf 4 und am unteren Ende mit einem Wasserauslaß 5 versehen. Weiterhin weist die Kammer 1 im unteren Bereich einen Lufteinlaß 6 und im oberen Bereich einen Luftauslaß 7 auf. Lufteinlaß 6 und Luftauslaß 7 sind so angeordnet, daß vom Einlaß 6 zum Auslaß 7 strömende Luft zwangsläufig an den Silberdrähten 2 entlangstreicht.

Oberhalb der Kammer 1 ist ein mit einem Überlauf 8 versehenes Wassergefäß 9 angeordnet, dessen unterer Auslaß 10 über eine Kapillare 11 mit dem Wassereinlaß 4 an der Kammer 1 verbunden ist. Der Wasserauslaß 5 der Kammer 1 ist mit einem Auffangbehälter 12 verbunden. Über eine Bypassleitung 13 ist der Überlauf 8 mit dem Auffangbehälter 12 verbunden. Eine Wasserpumpe 14 pumpt das im Behälter 12 aufgefangene Wasser durch eine Leitung 15 in den Behälter 9 oberhalb der Kammer 1 zurück. In dieser Rückführleitung 15 ist ein Ionenaustauscher 16 vor oder hinter der Pumpe 14 angeordnet. An den Luftauslaß 7 ist eine Saugluftpumpe 17 angeschlossen, deren Ausgang 18 ins Freie führt. An den Lufteinlaß 6 der Kammer 1 ist ein endseitig offenes Rohr 19 angeschlossen, durch welches hindurch die zu prüfende Luft angesaugt wird.

Die beiden Silberdrähte 2 sind elektrisch mit einem elektronischen Wechselstrom-Meßkreis 20 verbunden, an welchen ein Meßinstrument 21 und gegebenenfalls eine Warneinrichtung angeschlossen ist.

Im Betrieb stellt sich in dem Gefäß 9 ein von der Höhe h des Überlaufs 8 bestimmter Wasserspiegel ein, welcher einen entsprechenden Druck am Auslaß 10 des Gefäßes 9 zur Folge hat, so daß durch die Kapillare 11 hindurch eine pro Zeiteinheit konstante Wassermenge gefördert wird, sofern von der Pumpe 14 der Wasserspiegel in dem Gefäß 9 aufrechterhalten bleibt. Die Pumpe 14 fördert mehr Wasser, als durch die Kapillare 11 abtropfen kann, das überschüssige Wasser fließt durch den Überlauf 8 direkt in das Auffanggefäß 12 ab. Das aus dem Einlaß 4 in die Kammer tropfende Wasser tropft auf die Elektrodenanordnung und wird von deren Baumwollkissen aufgenommen. Die Luftpumpe 17 fördert eine pro Zeiteinheit konstante Luftmenge durch das Rohr 19 und die Kammer 1 hindurch. Es stellt sich zwischen den Elektroden 2 ein vom Säuregehalt der angesaugten Luft bestimmter Leitwert ein, der von dem elektronischen Meßkreis 20 ausgewertet und vom Meßinstrument 21 angezeigt wird.

Wenn man die beiden Meßelektroden derart dicht nebeneinander anordnet, daß sich das Wasser aufgrund von Kapillarwirkung zwischen ihnen hält, kann auf ein Kissen zwischen den Elektroden auch verzichtet werden.

# A n s p r ü c h e

1. Vorrichtung zum Messen des Elektrolytgehaltes, insbesondere des Säuregehalts, z.B. Salzsäuregehalts, von Luft, bestehend aus einer Leitfähigkeitsmeßstrecke aus zwei isoliert voneinander, nebeneinander geneigt oder lotrecht angeordneten, gegebenenfalls ein Kissen (3) aus saugfähigem Material zwischen sich einschließenden, an einen elektrischen Meßkreis (20) angeschlossenen Elektroden (2), einer Einrichtung (17), welche eine pro Zeiteinheit definierte Menge der zu untersuchenden Luft an den Elektroden vorbeiführt, und einem Wasserkreislauf, welcher eine Dosiereinrichtung (8, 9, 11) zum pro Zeiteinheit mengenmäßig definierten Zuführen von Wasser zum oberen Ende der Elektroden (2), eine Auffangeinrichtung (12) für das von den Elektroden (2) abtropfende Wasser, einen Ionenaustauscher (16) für das aufgefangene Wasser und eine Pumpe (14) zum Rückführen des Wassers zu der Dosiereinrichtung (8, 9, 11) umfaßt.

2. Vorrichtung nach Anspruch 1, dadurch gekennzeichnet, daß die Elektroden (2) in einer rohrförmigen Kammer (1) angeordnet sind, die mit Zuführ- und Abführöffnungen (6, 4 bzw. 7, 5) für Luft und Wasser ausgestattet ist.

3. Vorrichtung nach Anspruch 1 oder 2, dadurch gekennzeichnet, daß die Elektroden zwei textilisolierte, gegenüber dem Elektrolyten inerte Metalldrähte (2) sind, welche gemeinsam mit einem Textilfaden umwickelt sind.

4. Vorrichtung nach einem der Ansprüche 1 bis 3, dadurch gekennzeichnet, daß die Dosiereinrichtung für das Wasser aus einem Überlaufgefäß (9) zum Erzeugen eines konstanten Wasserdrucks und einer Tropfkapillare (11) zum Erzeugen einer definierten begrenzten Durchflußmenge am Ablauf (10) des Überlaufgefäßes (9) besteht, und daß der Überlauf (8) des Überlaufgefäßes (9) mit der Auffangeinrichtung (12) verbunden ist.

| Kategorie | Kennzeichnung des Dokuments mit Angabe, soweit erforderlich, der maßgeblichen Teile | betrifft Anspruch |
|---|---|---|
| | FR - A - 1 398 748 (L'AIR LIQUIDE)  * "Résumé" ; Figuren * | 1,2,4 |
| | FR - A - 2 267 546 (N.V.PHILIPS' GLOEILAMPENFABRIEKEN)  * Seite 4, Zeile 14 bis Seite 6, Zeile 1; Abbildungen * | 1,4 |
| | DE - B - 1 066 040 (BERGWERK VERBAND GmbH)  * Gänzlich * | 1,2 |
| | DE - A - 1 808 055 (CHEMIE-TECHNIK GmbH)  * Seite 4, letzter Absatz bis Seite 5, erster Absatz; Abbildungen * | 1 |
| | GB - A - 797 835 (J.F.ZWICKY)  * Seite 2, Zeile 6; bis Seite 3, Zeile 30; Abbildung 1 * | 1 |

**EINSCHLÄGIGE DOKUMENTE**

**KLASSIFIKATION DER ANMELDUNG (Int.Cl²)**

G 01 N 27/06
G 01 R 27/22

**RECHERCHIERTE SACHGEBIETE (Int. Cl.²)**

G 01 N 27/04
G 01 N 27/06
G 01 R 27/22
G 01 N 27/07
G 01 N 27/08
G 01 N 27/10
G 01 N 33/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-09-1978 | DUCHATELLIER |